# EUROPÄISCHE PATENTSCHRIFT

(11) **EP 1 518 628 B1**
(45) Veröffentlichungstag und Bekanntmachung des Hinweises auf die Patenterteilung: **03.01.2007**
(21) Anmeldenummer: 03021533.9
(22) Anmeldetag: 24.09.2003
(51) Int. Cl.: B23D 45/04, B27B 5/20, B27B 5/16

(54) **Kappsäge, insbesondere für die Holzbearbeitung**
Chop saw, in particular for wood working
Scie pivotante, en particulier pour le travail du bois

(43) Veröffentlichungstag der Anmeldung: 30.03.2005
(73) Patentinhaber: Metabowerke GmbH, 72622 Nürtingen (DE)
(72) Erfinder: Schaller, Hans Joachim, 49470 Haselünne (DE)
(74) Vertreter: Gesthuysen, von Rohr & Eggert

(56) Entgegenhaltungen:
- EP-A- 1 038 622
- CH-A- 298 982
- US-A- 1 743 714

## Beschreibung

Die Erfindung betrifft eine Kappsäge, insbesondere für die Holzbearbeitung, mit den Merkmalen des Oberbegriffs von Anspruch 1.

Kappsägen der in Rede stehenden Art sind seit Jahrzehnten bekannt. Beispielsweise wird insoweit auf die DE 202 03 147 U verwiesen. Kappsägen der in Rede stehenden Art sind zur Bearbeitung aller Arten von Werkstoffen geeignet. Ein besonderes Anwendungsfeld finden derartige Kappsägen bei der Holzbearbeitung. Das schließt nicht aus, daß die Lehre der vorliegenden Erfindung für Kappsägen andere Einsatzgebiete, insbesondere für die Kunststoffbearbeitung und Metallbearbeitung, Anwendung finden kann. Die zuvor angesprochene, bekannte Kappsäge ist in der praktischen Ausgestaltung eine Kapp-, Gehrungs- und Zugsäge.

Bei Kappsägen wird die Schnittlänge ungeachtet sonstiger Ausgestaltungen durch den Durchmesser des Sägeblattes, bei Verwirklichung einer Zugfunktion durch die Kombination von Durchmesser des Sägeblattes und Zuglänge begrenzt. Das bedeutet, daß man mit einer Kappsäge langgestreckte Werkstücke, beispielsweise Paneele für die Innenverkleidung von Räumen, nicht in Längsrichtung sägen kann. Letzteres gelingt jedoch mit einer Tischkreissäge, die ein einen Werkstückauflagetisch von unten her durchsetzendes Sägeblatt aufweist.

Die bekannte Kappsäge, von der die Erfindung ausgeht und die die Merkmale des Oberbegriffs von Anspruch 1 aufweist (US 1, 743,714 A) hat die zuvor angesprochene Problematik bei einem Universalwerkzeug bereits dadurch gelöst, daß das Sägeblatt aus einer geraden Kappsägestellung in eine rechtwinklig dazu ausgerichtete Längssägestellung verstellbar ist. In der Längssägestellung kann die Kappsäge Sägeschnitte bis zu einer bestimmten Breite des Werkstücks ohne Längenbegrenzung ausführen. Ein langgestrecktes Werkstück kann bei in Längssägestellung befindlichem Sägeblatt an dem Sägeblatt vorbeigeschoben werden und dabei einen Längsschnitt beliebiger Länge ausführen.

Längssägeschnitte können bei der bekannten, zuvor erläuterten Kappsäge nur freihändig ausgeführt werden, weil eine Anschlagschiene hier nicht vorgesehen ist. Das liegt daran, daß sich die Lage des Sägeblattes in Längssägestellung wesentlich näher am rückwärtigen Rand der Werkstückauflagefläche befindet als in Kappsägestellung.

Eine Säge mit einem in Kapp- und Längssägestellung verstellbaren Sägeblatt und einer Anschlagschiene wird in EP 1 038 622 A2 offenbart, aber auch bei dieser Säge können die Längsschnitte nur freihändig ausgeführt werden weil das Sägeblatt nicht im Abstand zur Anschlagschiene fixierbar ist.

Der Lehre liegt somit das Problem zu Grunde, die bekannte Kappsäge so auszugestalten und weiterzubilden, daß diese Kappsägeschnitte und Längssägeschnitte bis zu einer bestimmten Breite in Werkstücken mit hoher Präzision auszuführen erlaubt.

Die zuvor aufgezeigte Problemstellung ist gelöst bei einer Kappsäge mit den Merkmalen des Oberbegriffs von Anspruch 1 durch die Merkmale des kennzeichnenden Teils von Anspruch 1. Voraussetzung für die Verwirklichung der Lehre ist die Funktion einer Kappsäge mit Zugfunktion. Gehrungsfunktion und Schifterfunktion können vorhanden sein, müssen dies aber nicht.

Wie beim Ausgangspunkt für die Lehre erlaubt es auch hier die Längssägeposition, eine langgestrecktes Werkstück bei in Sägestellung befindlichem Sägeblatt an dem Sägeblatt vorbeizuführen und dabei einen Längsschnitt beliebiger Länge auszuführen. Auch andere Bearbeitungen wie Nuten o.dgl. können ausgeführt werden, da das Werkstück bei dieser Lage des Sägeblattes nicht mit der Halterung des Sägeaggregates am Träger kollidiert, weil es daran quer vorbeigeführt werden kann. Aufgrund der erfindungsgemäß vorgesehenen Merkmalskombination ist es nun aber so, daß die Längssägeposition wie die Kapsägeposition sich vor einer an der Werkstückauflagefläche befindlichen Anschlagschiene zum Anlegen eines Werkstückes befindet. Damit erlaubt es die beanspruchte Kappsäge, auch die Längssägeschnitte entlang der Anschlagschiene durchzuführen. Technisch wird das dadurch möglich, daß das Sägeaggregat in der vorderen, ausgezogenen Arbeitsposition blockierbar ist, in der dann das Sägeblatt in der Längssägestellung eben vor der Anschlagschiene zu liegen kommt.

Die Anschlagschiene dient beim Längssägen nicht nur dem Anschlag, also der Anlage des Werkstückes, sondern der Längsführung des Werkstückes. Ihre Lage relativ zu dem in Längssägestellung befindlichen Sägeblatt definiert die Lage des Sägeschnittes relativ zum Seitenrand des Werkstückes. Durch eine Verstellung der Anschlagschiene läßt sich bei feststehendem Sägeblatt die Breite variieren.

Es gibt nun eine Vielzahl von Möglichkeiten, die Lehre der Erfindung auszugestalten und weiterzubilden. Dazu darf auf die Unteransprüche verwiesen werden. Zu einzelnen Unteransprüchen ist noch eine besondere Bemerkung angezeigt.

Grundsätzlich ist eine vordere, ausgezogene Arbeitsposition des Sägeaggregates vorgesehen.

Allerdings könnte man die Lage des Sägeaggregates durch Wahl verschiedener Arbeitspositionen, die jeweils fixierbar sind, variieren. Das wäre eine, ggf. zusätzliche Möglichkeit, die Breite des Werkstückes zwischen Rand und Sägeschnitt zu bestimmen.

Anspruch 5 definiert eine besonders zweckmäßige, weil den hohen Belastungen beim Sägen besonders gut entsprechende Schwenklagerung des Sägeaggregates.

Anspruch 6 befaßt sich mit der aus Sicherheitsgründen zu bevorzugenden Lösung, einen Eintauchschlitz auch für die Längssägestellung des Sägeblattes vorzusehen.

Beim Anbringen kurzer Kappschnitte bedarf es keines Spaltkeils zum Offenhalten des Sägeschlitzes im Werkstück. Bei längeren Sägeschnitten allerdings muß ein Blockieren des Sägeblattes im Sägeschlitz des Werkstückes verhindert werden, dazu dient normalerweise ein Spaltkeil. Dieser wäre für die Längssägestellung zweckmäßig und kann sowohl am Sägeaggregat als auch am Träger bzw. am Werkstückauflagetisch angebracht werden. Besonders zweckmäßig ist eine Anbringung an der Pendelschutzhaube, die dazu allerdings entsprechend stabil ausgeführt sein muß.

Im folgenden wird nun die Erfindung anhand einer lediglich ein Ausführungsbeispiel darstellenden Zeichnung näher erläutert. In der Zeichnung zeigt
- Fig. 1: ein bevorzugtes Ausführungsbeispiel einer erfindungsgemäßen Kappsäge, das Sägeaggregat in Ruhestellung, ein Werkstück aufliegend,
- Fig. 2: die Kappsäge aus Fig. 1 mit in Sägestellung abgesenktem Sägeaggregat zur Ausführung eines Kappsägeschnittes,
- Fig. 3: die Kappsäge aus Fig. 1, das Sägeaggregat in ausgezogener Arbeitsposition und gegenüber der Halterung in Längssägestellung, also gegenüber Fig. 2 um 90° um die Hochachse geschwenkt, das Werkstück in einem Längsschnitt sägend,
- Fig. 4: die Kappsäge aus Fig. 3 in einer Seitenansicht, aus der die ausgezogene Lage des Sägeaggregates deutlich wird und
- Fig. 5: eine Gesamtansicht einer Sägevorrichtung des Standes der Technik, von dem die vorliegende Erfindung ausgeht, das Sägeaggregat in abgesenkter Sägestellung.

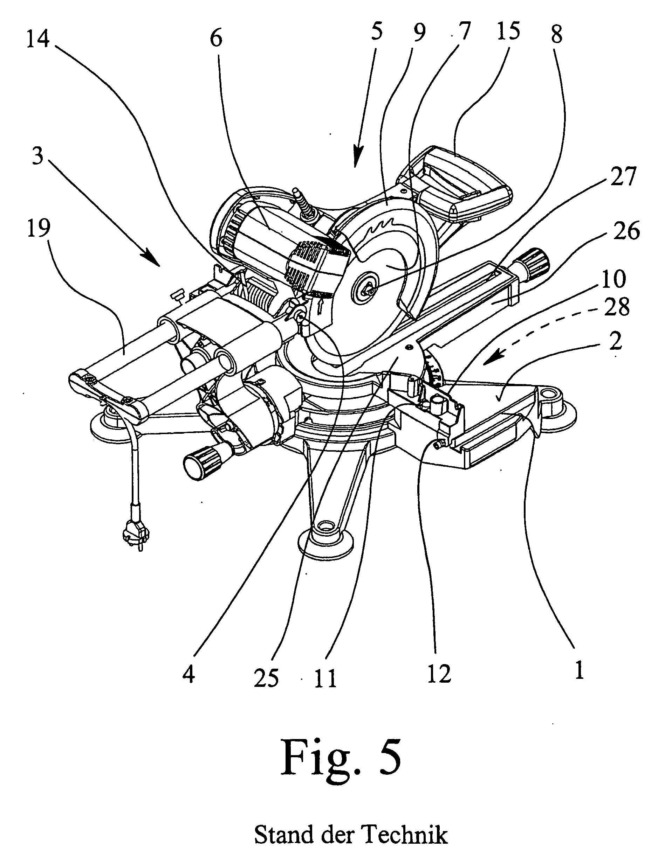

Für die vorliegend geschilderte Problemlösung ist Voraussetzung lediglich das Vorhandensein einer Kappsäge. Eine im Stand der Technik bekannte Säge ist eine kombinierte Kapp-, Gehrungs- und Zugsäge, dargestellt in Fig. 5. Auch das Ausführungsbeispiel der erfindungsgemäßen Kappsäge ist eine solche universell ausgestaltete Säge. Das ändert nichts daran, daß dies keine zwingende Voraussetzung für die Verwirklichung der Lehre ist.

Dargestellt ist das Sägen von Holz, nämlich eines Holzbrettes als Werkstück. Die im allgemeinen Teil der Beschreibung einleitend genannten anderen Materialien sind aber ebenso zu bearbeiten, sofern ein entsprechendes, zum Material passendes Sägeblatt verwendet wird.

Die in Fig. 5 dargestellte, bekannte Kappsäge weist zunächst einen Träger 1 auf, der an der Oberseite eine Werkstückauflagefläche 2 bildet. Am Träger 1 ist eine Halterung 3 angebracht. Oberhalb des Trägers 1 ist an der Halterung um eine Querachse 4 schwenkbar angebracht ein Sägeaggregat 5 mit einem Antriebsmotor 6 und einem Sägeblatt 7. Das Sägeblatt 7 ist auf einer Antriebswelle 8 eines mit dem Antriebsmotor 6 gekoppelten Untersetzungsgetriebes aufgeflanscht. Eine Pendelschutzhaube 9 schützt das Sägeblatt 7 in der in Fig. 5 nicht dargestellten angehobenen Ruhestellung. Fig. 5 zeigt die abgesenkte Sägestellung des Sägeblattes 7, in der ein hier nicht dargestelltes Werkstück geschnitten werden kann.

Die Darstellung des Standes der Technik in Fig. 5 zeigt im übrigen an der Werkstückauflagefläche 2 eine Anschlagschiene 10, die mittels einer Justieranordnung 11 und einer Fixieranordnung 12 im dargestellten Ausführungsbeispiels sogar abnehmbar und justierbar angebracht ist. Das ist eine besondere Ausgestaltung bei diesem Stand der Technik.

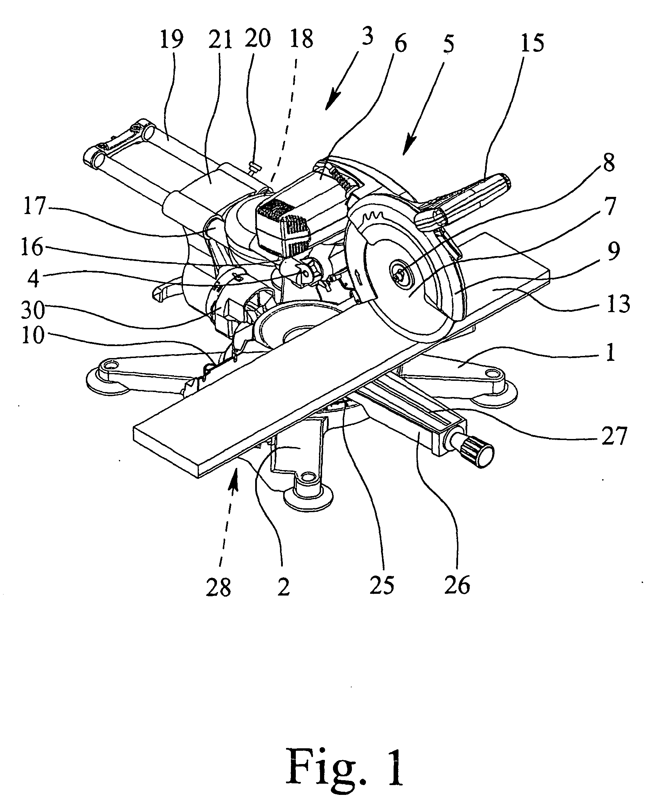

Die beanspruchte Kappsäge stimmt in den zuvor erläuterten Konstruktionsmerkmalen im wesentlichen mit der aus dem Stand der Technik bekannten Kappsäge überein, Fig. 1 verwendet an den entsprechenden Stellen dieselben Bezugszeichen. Auf die voranstehenden Ausführungen darf verwiesen werden.

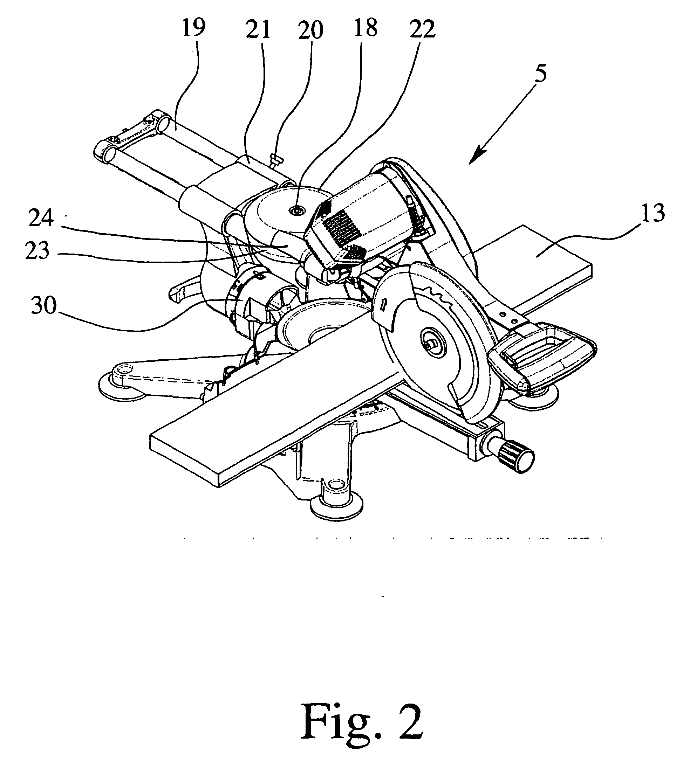

Sowohl die aus dem Stand der Technik bekannte Kappsäge als auch die beanspruchte Kappsäge ist so ausgestaltet, daß das Sägeaggregat 5 um die Querachse 4 aus einer Ruhestellung mit angehobenem Sägeblatt 7 in eine Sägestellung mit abgesenktem Sägeblatt 7 und umgekehrt schwenkbar ist. Fig. 2 zeigt die abgesenkte Sägestellung, wie bereits erläutert. Mit abgesenkter Sägestellung kann die Bearbeitung eines Werkstückes 13, das in Fig. 5 nicht dargestellt ist, jedoch in Fig. 2 dargestellt ist, erfolgen. Fig. 2 zeigt die Kappsägestellung, Fig. 1 die angehobene Ruhestellung.

Fig. 5 läßt zur Vervollständigung des Verständnisses noch weiter erkennen, daß an der Halterung 3 zwischen dem Sägeaggregat 5 und der Halterung 3 an der Querachse 4 eine Rückstellfeder 14 vorgesehen ist, durch die das Sägeaggregat 5 stets in seine angehobene Ruhestellung federbelastet ist, aus der es dann entgegen dieser Federkraft in die abgesenkte Sägestellung heruntergedrückt werden kann. Ein Betätigungsgriff 15 dient der Betätigung des Sägeaggregates 5 und integriert gleichzeitig den Einschalter für den elektrischen Antriebsmotor 6 sowie einen Betätigungshebel zur Freigabe der Blockierung der Pendelschutzhaube 9. Das ist alles aus dem Stand der Technik bekannt und bedarf hier keiner weiteren Erläuterung.

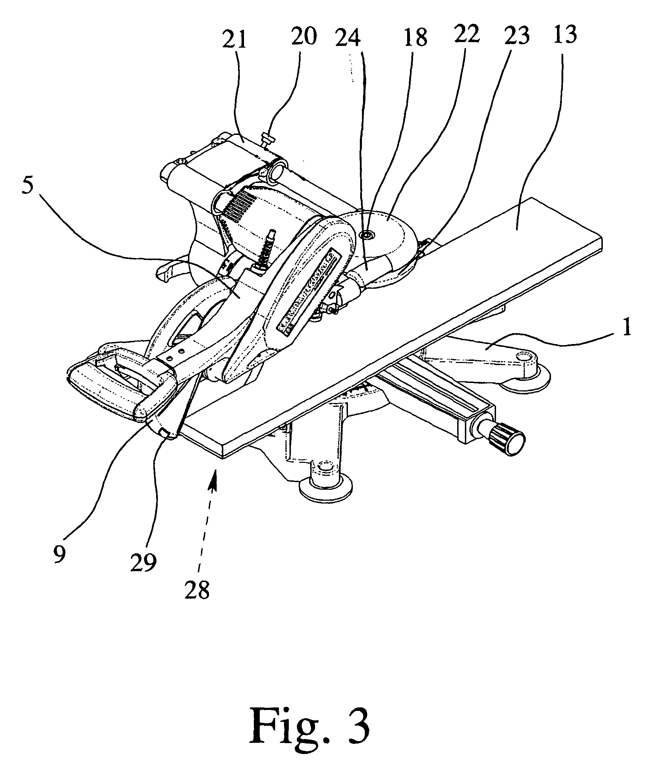

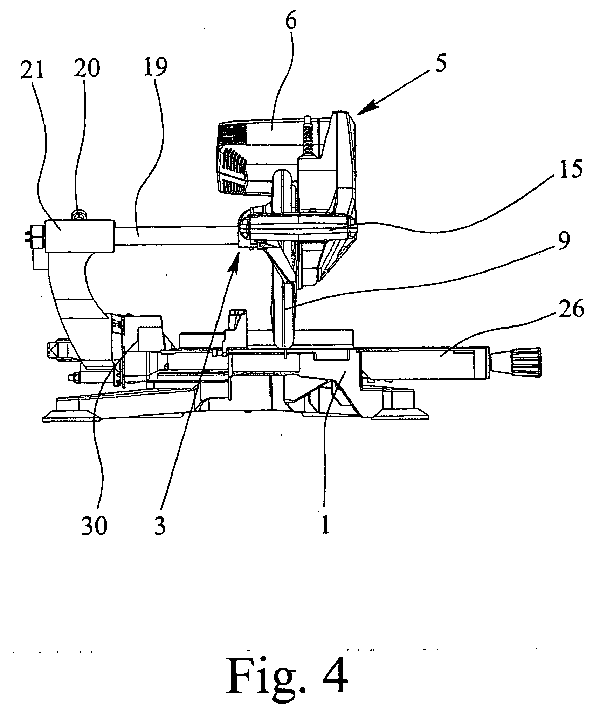

Fig. 1, 2 und 3 zeigen nun, daß bei der beanspruchten Kappsäge die Halterung 3 zumindest zweiteilig ausgebildet ist. Die Halterung 3 weist nämlich einen die Querachse 4 aufweisenden ersten Halterungsteil 16 und einen den ersten Halterungsteil 16 tragenden zweiten Halterungsteil 17 auf. Der erste Halterungsteil 16 ist am zweiten Halterungsteil 17 um eine im wesentlichen rechtwinklig zur Querachse 4 verlaufende Hochachse 18, die im dargestellten Ausführungsbeispiel sogar körperlich als Verbindungsschraube vorhanden ist, schwenkbar angebracht. Durch Schwenkung des ersten Halterungsteils 16 gegenüber dem zweiten Halterungsteil 17 ist das Sägeblatt 7 aus einer geraden Kappsägestellung, dargestellt in Fig. 1 und 2, zumindest in eine rechtwinklig dazu ausgerichtete Längssägestellung, dargestellt in Fig. 3 und 4, und natürlich wiederum umgekehrt ebenfalls verstellbar. In der Kappsägestellung kann die beanspruchte Kappsäge alle Funktionen einer normalen Kappsäge, hier alle Funktionen einer Kapp-, Gehrungs- und Zugsäge ausführen. Hinzugekommen ist die Längssägefunktion in der Längssägestellung gemäß Fig. 3 und 4. Diese wird durch die zusätzliche Schwenklagerung des Sägeaggregates 5, zumindest des Sägeblattes 7, ermöglicht.

Grundsätzlich ist es bekannt, daß man einen Antriebsmotor 6 mit einem Sägeblatt 7 bei einem Sägeaggregat 5 der in Rede stehenden Art nicht starr koppeln muß, sondern auch beweglich koppeln kann. Das dargestellte und bevorzugte Ausführungsbeispiel zeigt allerdings, daß das Sägeaggregat 5 insgesamt mitsamt dem Sägeblatt 7 und dem Antriebsmotor 6 gemeinsam verstellbar ist. Dabei führt das Sägeblatt 7 einen weiteren Bewegungsweg aus als der Antriebsmotor 6, weil das Sägeblatt 7 weiter entfernt von der Querachse 4 liegt als der Antriebsmotor 6.

Bereits zu dem Stand der Technik aus Fig. 5 ist darauf hingewiesen worden, daß an der Werkstückauflagefläche 2 normalerweise eine Anschlagschiene 10 zum Anlegen eines Werkstücks 13 angeordnet ist. Das ist auch im dargestellten Ausführungsbeispiel der Fall. Das dargestellte und insoweit bevorzugte Ausführungsbeispiel zeigt dabei, daß das Sägeblatt 7 des Sägeaggregates 5 sowohl in der Kappsägestellung als auch in der Längssägestellung vor der Anschlagschiene 10 steht. Allerdings weist die Anschlagschiene 10 einen insoweit ebenfalls bekannten bogenförmigen Rücksprung in der Mitte auf, in den das Sägeblatt 7 für ein kurzes Stück hineinfahren kann, um das an der Anschlagschiene 10 anliegende Werkstück 13 auch komplett durchzuschneiden.

Eine Alternative, die allerdings in der Zeichnung nicht dargestellt ist, besteht aber auch darin, daß neben der Anschlagschiene für das Kappsägen eine weitere Anschlagschiene für das Längssägen vorhanden ist. Dann könnte man mit einer anderen Relativlage von Werkstück, Sägeaggregat und Anschlagschiene beim Längssägen arbeiten.

Wie bereits bei der aus dem Stand der Technik bekannten und in Fig. 5 dargestellten Kappsäge weist auch die hier beanspruchte Kappsäge eine Halterung 3 auf, die eine zusätzliche Zuganordnung 19 aufweist. Das dargestellte Ausfiihrungsbeispiel zeigt die Zuganordnung 19 mit zwei nebeneinander liegenden, beabstandeten Zugstangen, die in entsprechenden Führungen geführt sind. Mit der Zuganordnung 19 ist das Sägeaggregat 5 aus einer rückwärtigen Ruheposition, gezeigt in Fig. 5 und Fig. 1, in eine vordere, ausgezogene Arbeitsposition und natürlich wiederum auch umgekehrt verstellbar.

Das dargestellte Ausführungsbeispiel zeigt in den Fig. 1 bis 4 oben den ersten Halterungsteil 16 der Halterung 3, unten den zweiten Halterungsteil 17 der Halterung 3 und davon ausgehend die nebeneinander liegenden Zugstangen der Zuganordnung 19.

Das dargestellte und bevorzugte Ausführungsbeispiel zeigt nun weiter, daß das Sägeaggregat 5 in einer vorderen, ausgezogenen Arbeitsposition, dargestellt in Fig. 3 und Fig. 4, blockierbar ist. Die Blockierung gelingt im dargestellten Ausführungsbeispiel durch eine Blockieranordnung 20 an der Führung 21 der Zugstangen der Zuganordnung 19. Die Blockieranordnung 20 hat hier die Form einer Rändelschraube, die in eine entsprechende Öffnung einer Zugstange der Zuganordnung 17 bei Erreichen der ausgezogenen Arbeitsposition des Sägeaggregates 5 eingeschraubt oder hineingedrückt werden kann.

Nicht dargestellt ist in der Zeichnung, daß auch mehrere, unterschiedlich weit ausgezogene Arbeitspositionen des Sägeaggregates 5 verwirklicht sein können, die dann, Fig. 3 und 4, unterschiedliche Längssägestellungen des Sägeaggregates 5 bzw. des Sägeblattes 7 realisieren lassen.

Das dargestellte Ausführungsbeispiel zeigt ferner, daß die Schwenkung des Sägeaggregates 5 um die Hochachse 18 in die Längssägestellung nur in der vorderen, ausgezogenen Arbeitsposition (bzw. in jeder der ausgezogenen Arbeitspositionen) des Sägeaggregates 5 überhaupt freigegeben ist. Das kann man durch eine entsprechende Verriegelungsanordnung, die in den Zeichnungen allerdings nicht zu erkennen ist, realisieren. Diese Verriegelung dient der Sicherheit und stellt eine bevorzugte Ausführungsform der Kappsäge dar.

Die Darstellungen insbesondere in Fig. 2 und Fig. 3 lassen gut erkennen, daß im dargestellten und bevorzugten Ausführungsbeispiel die die Hochachse 18 bildende Schwenklagerung flach und scheibenartig mit einer Oberscheibe 22 und einer Unterscheibe 23 ausgeführt ist, die über die die Hochachse 18 bildende Verbindungsschraube miteinander verbunden sind. Das Sägeaggregat 5 ist an der Oberscheibe 22 mittels zweier nebeneinander liegender Tragstangen 24 angebracht. Im dargestellten Ausführungsbeispiel ist die Unterscheibe 23 an zwei nebeneinander liegenden Zugstangen der Zuganordnung 19 angebracht. Die scheibenartige Ausführung der Schwenklagerung mit Oberscheibe 22 und Unterscheibe 23 setzt die breit angelegte Aufhängung des Sägeaggregates 5 mittels der Zuganordnung 19 in gleicher Weise fort und schafft eine stabile, hoch belastbare Schwenklagerung für das Sägeaggregat 5. An Oberscheibe 22 und Unterscheibe 23 können radial außen liegende kreisförmige Führungen das beachtliche Gewicht des Sägeaggregates 5 abstützen.

Das dargestellte und bevorzugte Ausführungsbeispiel einer Kappsäge zeigt weiter, daß, wie auch schon der Stand der Technik in Fig. 5, die Werkstückauflagefläche 2 ganz oder, wie hier, zum Teil an einem auf dem Träger 1 angebrachten, um eine Hochachse drehbar gelagerten Werkstückauflagetisch 25 ausgebildet ist. Der Werkstückauflagetisch 25 weist im dargestellten und bevorzugten Ausführungsbeispiel einen Auslegerarm 26 auf. Im Werkstückauflagetisch 25 und im Auslegerarm 26 befindet sich ein Eintauchschlitz 27 für den Rand des Sägeblattes 7 in dessen Sägestellung. Dadurch ist der Rand des Sägeblattes 7 in abgesenkter Sägestellung gegen Berührungen geschützt. Die Halterung 3 ist am Werkstückauflagetisch 25 und damit mit diesem drehbar gegenüber dem Träger 1 angeordnet. Damit ist die weiter oben bereits zum Stand der Technik beschriebene Gehrungsfunktion realisiert.

Einen Eintauchschlitz 27 für den Rand des Sägeblattes 7 hat man in aller Regel natürlich auch bei einer reinen Kappsäge.

Angedeutet ist in der Zeichnung nun, daß nach bevorzugter Lehre vorzusehen ist, daß die Werkstückauflagefläche 2 einen weiteren Eintauchschlitz oder eine Ausnehmung (Aussparung) 28 für den Rand des in der Längssägestellung befindlichen und in die Sägestellung abgesenkten Sägeblattes 7 aufweist. Dadurch wäre der Rand des Sägeblattes 7 auch in Längssägestellung gegen Berührungen von unten her geschützt.

Fig. 5 zeigt im Stand der Technik eine Aussparung 28, die einfach radial außerhalb des Werkstückauflagetisches 25 zwischen dem Auslegerarm 26 und dem Träger 1 vorliegt. Diese Aussparung 28 befindet sich auch bei den in Fig. 2 ff. dargestellten Konstruktion an der selben Stelle. Man erkennt, daß bei der Längssägestellung des Sägeaggregates 5 in Fig. 3 das Sägeblatt 7 mit seinem durch das Werkstück 11 hindurchgreifenden Rand gerade in dieser Aussparung 28 liegt. Erfindungsgemäß könnte man nun gerade hier bei der 90°-Stellung einen zusätzlichen seitlichen Eintauchschlitz vorsehen, der stationär dort angebracht ist oder in einem anbringbaren Zusatzteil nach Art eines Auslegerarms vorliegt.

Grundsätzlich ist es im übrigen möglich, das Sägeaggregat 5 auch in andere Winkelstellungen mittels der Schwenklagerung zu bringen, diese haben aber in der Praxis geringere Bedeutung.

Weiter oben ist bereits auf die Bedeutung eines Spaltkeils 29 für ein Anbringen längerer Sägeschnitte in einem Werkstück 13 hingewiesen worden. Nach bevorzugter Lehre ist daher auch bei dem dargestellten Ausrührungsbeispiel vorgesehen, daß am Sägeaggregat 5 oder am Träger 1 oder, besonders bevorzugt, an der Pendelschutzhaube 9 des Sägeaggregates 5 ein Spaltkeil 29 für die Längssägestellung des Sägeaggregates 5 angebracht oder anbringbar ist. Fig. 3 deutet das an der Pendelschutzhaube 9 an.

Die Position eines Spaltkeils 29 relativ zum Sägeblatt 7 des Sägeaggregates 5 bei längeren Sägeschnitten im Werkstück 13 ist dem Fachmann bekannt. Der Abstand des Spaltkeils 29 zum Sägeblatt 7 sollte nicht sehr groß sein. Der Spaltkeil 29 sollte zum Sägeblatt 7 genau ausgerichtet sein und minimal breiter als das Sägeblatt 7 ausfallen. Diese Kriterien kann ein Spaltkeil 29 realisieren, der beispielsweise an dem in der Aussparung 28 befindlichen zusätzlichen Auslegerarm angebracht ist, der seinerseits auch den zusätzlichen, zweiten Eintauchschlitz für den Rand des Sägeblattes 7 in der Längssägestellung trägt. Das dargestellte Ausführungsbeispiel mit dem Spaltkeil 29 an der Pendelschutzhaube 9 ist allerdings auch sehr zweckmäßig, weil der Spaltkeil 29 hier tatsächlich gerade dort liegt wo man ihn auch benötigt.

Zur Vervollständigung der Beschreibung der erfindungsgemäßen Kappsäge sei noch darauf hingewiesen, daß die hier dargestellte Ausführungsform ferner so gestaltet ist, daß die Halterung 3 noch eine Neigungsanordnung 30 aufweist, mit der das Sägeaggregat 5 gegenüber dem Träger 1 um eine im wesentlichen rechtwinklig zur Querachse 4 verlaufende, in der oder parallel zu der Ebene der Werkstückauflagefläche 2 liegende Längsachse schwenkbar ist. Das ist bereits aus dem Stand der Technik bekannt. Die Neigungsanordnung 30 ist so ausgeführt, daß die Schwenkung nur einseitig vorgesehen und auf maximal 45° begrenzt ist. Das entspricht der Praxis auch des Standes des Technik. Durch die Kombination von Neigung mittels der Neigungsanordnung 30 und Drehung des Werkstückauflagetisches 25 gegenüber dem Träger 1 sind die zuvor erwähnten Schifterschnitte realisierbar.

Insgesamt ergibt sich eine Kappsäge, die zusätzlich eine Längssägefunktion hat. Das ist in vielen Fällen auch dann bereits ein erheblicher Vorteil, wenn die Breite der Werkstücke 13, bzw. die Streifenbreite, die bei Anbringung eines Längssägeschnittes erzielbar ist, begrenzt bleibt. Die gerade bei Innenausbauarbeiten häufig vorkommenden Längsschnitte an Paneelen lassen sich mit einer solchen Kappsäge sehr gut ausführen.

Voll aufgerüstet, wie im dargestellten Ausführungsbeispiel gezeigt, ist die beanspruchte Kappsäge eine nahezu universell einsetzbare Säge, insbesondere für Holzarbeiten.

## Patentansprüche

1. Kappsäge
mit einem Träger, der eine Werkstückauflagefläche (2) bildet,
einer am Träger (1) angebrachten Halterung (3) und
einem oberhalb des Trägers (1) an der Halterung (3) um eine Querachse (4) schwenkbar angebrachten Sägeaggregat (5) mit einem Antriebsmotor (6) und einem Sägeblatt (7),
wobei das Sägeaggregat (5) um die Querachse (4) aus einer Ruhestellung mit angehobenem Sägeblatt (7) in eine Sägestellung mit abgesenktem Sägeblatt (7) und umgekehrt schwenkbar ist,
wobei die Halterung (3) zumindest zweiteilig ausgebildet ist,
wobei ein die Querachse (4) aufweisender erster Halterungsteil (16) an einem diesen tragenden zweiten Halterungsteil (17) um eine im wesentlichen rechtwinklig zur Querachse (4) verlaufende Hochachse (18) schwenkbar angebracht ist,
wobei das Sägeblatt (7) durch Schwenkung des ersten Halterungsteils (16) gegenüber dem zweiten Halterungsteil (17) aus einer geraden Kappsägestellung zumindest in eine rechtwinklig dazu ausgerichtete Längssägestellung und umgekehrt verstellbar ist,
**dadurch gekennzeichnet,**
**daß** die Halterung (3) eine Zuganordnung (19) aufweist, mit der das Sägeaggregat (5) aus einer rückwärtigen Ruheposition in eine vordere, ausgezogene Arbeitsposition und umgekehrt verstellbar ist,
**daß** an der Werkstückauflagefläche (2) eine Anschlagschiene (10) zum Anlegen eines Werkstücks (13) angeordnet ist und daß das Sägeblatt (7) des Sägeaggregates (5) in Kappsägestellung und in Längssägestellung vor der Anschlagschiene (10) steht und
**daß** das Sägeaggregat (5) in der vorderen, ausgezogenen Arbeitsposition blockierbar ist.

2. Kappsäge nach Anspruch 1, **dadurch gekennzeichnet, daß** das Sägeaggregat (5) in verschiedenen, unterschiedlich ausgezogenen Arbeitspositionen blockierbar ist.

3. Kappsäge nach Anspruch 1 oder 2, **dadurch gekennzeichnet, daß** die Schwenkung des Sägeaggregates (5) um die Hochachse (18) in die Längssägestellung nur in der vorderen, ausgezogenen Arbeitsposition des Sägeaggregates (5) freigegeben ist.

4. Kappsäge nach einem der Ansprüche 1 bis 3, **dadurch gekennzeichnet, daß** das Sägeaggregat (5) mit dem Sägeblatt (4) gemeinsam verstellbar ist.

5. Kappsäge nach einem der Ansprüche 1 bis 4, **dadurch gekennzeichnet, daß** die die Hochachse (18) bildende Schwenklagerung flach und scheibenartig mit einer Oberscheibe (22) und einer Unterscheibe (23) ausgeführt ist,
vorzugsweise, daß das Sägeaggregat (5) an der Oberscheibe (22) mittels nebeneinanderliegender Tragstangen (24) angebracht ist und/oder, vorzugsweise, daß die Unterscheibe (23) an zwei nebeneinander liegenden Zugstangen einer Zuganordnung (19) angebracht ist.

6. Kappsäge nach einem der Ansprüche 1 bis 5, **dadurch gekennzeichnet, daß** die Werkstückauflagefläche (2) ganz oder zum Teil an einem auf dem Träger (1) angebrachten, um eine Hochachse drehbar gelagerten Werkstückauflagetisch (25) vorgesehen ist, wobei der Werkstückauflagetisch (25) vorzugsweise einen Auslegerarm (26) aufweist, und daß die Halterung (3) am Werkstückauflagetisch (25) angebracht ist.

7. Kappsäge nach einem der Ansprüche 1 bis 6, **dadurch gekennzeichnet, daß** die Werkstückauflagefläche (2) einen Eintauchschlitz (27) oder eine Ausnehmung für den Rand des in Kappsägestellung befindlichen und in Sägestellung abgesenkten Sägeblattes (7) aufweist und daß die Werkstückauflagefläche (2) ferner einen weiteren Eintauchschlitz oder eine Ausnehmung (28) für den Rand des in Längssägestellung befindlichen und in Sägestellung abgesenkten Sägeblattes (7) aufweist und, vorzugsweise, daß der weitere Eintauchschlitz rechtwinklig zum ersten Eintauchschlitz (27) ausgerichtet ist.

8. Kappsäge nach einem der Ansprüche 1 bis 7, **dadurch gekennzeichnet, daß** am Sägeaggregat (5), am Träger (1) oder, vorzugsweise, an der Pendelschutzhaube (9) ein Spaltkeil (29) für die Längssägestellung des Sägeaggregates (5) anbringbar oder angebracht ist.

9. Kappsäge nach einem der Ansprüche 1 bis 8, **dadurch gekennzeichnet, daß** die Halterung (3) eine Neigungsanordnung (30) aufweist, mit der das Sägeaggregat (5) gegenüber dem Träger (1) um eine im wesentlichen rechtwinklig zur Querachse (4) verlaufende, in der oder parallel zu der Ebene der Werkstückauflagefläche (2) liegende Längsachse schwenkbar ist, wobei, vorzugsweise, die Schwenkung nur einseitig vorgesehen und vorzugsweise auf maximal 45° begrenzt ist.

## Claims

1. Crosscut saw, having a support which forms a work-supporting surface (2), a holder (3) attached to the support (1), and a saw unit (5) which is attached above the support (1) to the holder (3) in such a way as to be pivotable about a transverse axis (4) and has a drive motor (6) and a saw blade (7), the saw unit (5) being pivotable about the transverse axis (4) from a rest position with raised saw blade (7) into a sawing position with lowered saw blade (7), and vice versa, the holder (3) being of at least two-piece design, a first holder part (16) which has the transverse axis (4) being attached to a second holder part (17), carrying said first holder part (16), in such a way as to be pivotable about a vertical axis (18) running essentially at right angles to the transverse axis (4), it being possible for the saw blade (7) to be adjusted from a straight crosscut sawing position at least into a longitudinal sawing position oriented at right angles thereto by pivoting the first holder part (16) relative to the second holder part (17), and vice versa, **characterized in that** the holder (3) has a pulling arrangement (19), with which the saw unit (5) can be adjusted from a rear rest position into a front, pulled-out working position, and vice versa, **in that** a stop rail (10) for positioning a workpiece (13) is arranged on the work-supporting surface (2), and **in that** the saw blade (7) of the saw unit (5) is in front of the stop rail (10) in the crosscut sawing position and in the longitudinal sawing position, and **in that** the saw unit (5) can be locked in the front, pulled-out working position.

2. Crosscut saw according to Claim 1, **characterized in that** the saw unit (5) can be locked in various working positions pulled out to a different extent.

3. Crosscut saw according to Claim 1 or 2, **characterized in that** pivoting of the saw unit (5) about the vertical axis (18) into the longitudinal sawing position is only released in the front, pulled-out working position of the saw unit (5).

4. Crosscut saw according to one of Claims 1 to 3, **characterized in that** the saw unit (5) can be adjusted together with the saw blade (4).

5. Crosscut saw according to one of Claims 1 to 4, **characterized in that** the pivot mounting forming the vertical axis (18) is designed in a flat and disc-shaped manner with a top disc (22) and a bottom disc (23), preferably **in that** the saw unit (5) is attached to the top disc (22) by means of supporting rods (24) lying next to one another, and/or preferably **in that** the bottom disc (23) is attached to two pull rods, lying next to one another, of a pulling arrangement (19).

6. Crosscut saw according to one of Claims 1 to 5, **characterized in that** the work-supporting surface (2) is provided entirely or partly on a work-supporting table (25) attached to the support (1) and pivotably mounted about a vertical axis, the work-supporting table (25) preferably having an extension arm (26), and **in that** the holder (3) is attached to the work-supporting table (25).

7. Crosscut saw according to one of Claims 1 to 6, **characterized in that** the work-supporting surface (2) has a plunge slot (27) or a recess for the edge of the saw blade (7) located in the crosscut sawing position and lowered in the sawing position, and **in that**, furthermore, the work-supporting surface (2) has a further plunge slot or a recess (28) for the edge of saw blade (7) located in the longitudinal sawing position and lowered in the sawing position, and preferably **in that** the further plunge slot is oriented at right angles to the first plunge slot (27).

8. Crosscut saw according to one of claims 1 to 7, **characterized in that** a riving knife (29) for the longitudinal sawing position of the saw unit (5) can be attached or is attached to the saw unit (5), to the support (1) or preferably to the pivoting blade guard (9).

9. Crosscut saw according to one of Claims 1 to 8, **characterized in that** the holder (3) has an inclination arrangement (30), with which the saw unit (5) is pivotable relative to the support (1) about a longitudinal axis running essentially at right angles to the transverse axis (4) and lying in the or parallel to the plane of the work-supporting surface (2), the pivoting preferably being provided only on one side and preferably being limited to a maximum of 45°.

## Revendications

1. Scie oscillatoire, comprenant un support qui forme une surface d'appui de pièce (2), une fixation (3) montée sur le support (1) et une unité de scie (5) montée sur la fixation (3) au-dessus du support (1) de manière à pouvoir pivoter autour d'un axe transversal (4), avec un moteur d'entraînement (6) et une lame de scie (7),
l'unité de scie (5) pouvant pivoter autour de l'axe transversal (4) d'une position de repos avec la lame de scie (7) soulevée dans une position de sciage avec la lame de scie abaissée (7) et inversement,
la fixation (3) étant réalisée au moins en deux parties,
une première partie de fixation (16) présentant l'axe transversal (4) étant montée sur une deuxième partie de fixation (17) portant celle-ci, de manière à pouvoir pivoter sur un axe vertical (18) s'étendant essentiellement perpendiculairement à l'axe transversal (4),
la lame de scie (7) pouvant être déplacée par pivotement de la première partie de fixation (16) par rapport à la deuxième partie de fixation (17) d'une position de scie oscillatoire droite au moins dans une position de scie longitudinale orientée à angle droit par rapport à celle-ci, et inversement,
**caractérisée en ce que**
la fixation (3) présente un agencement de traction (19) avec lequel l'unité de scie (5) peut être déplacée d'une position de repos arrière dans une position de travail avant ressortie, et inversement,
**en ce qu'**un rail de butée (10) est disposé sur la surface d'appui de pièce (2) pour l'appui d'une pièce (13) et **en ce que** la lame de scie (7) de l'unité de scie (5) se trouve dans la position de scie oscillatoire et dans la position de scie longitudinale devant le rail de butée (10) et **en ce que** l'unité de scie (5) peut être bloquée dans la position de travail avant ressortie.

2. Scie oscillatoire selon la revendication 1, **caractérisée en ce que** l'unité de scie (5) peut être bloquée dans différentes positions de travail ressorties.

3. Scie oscillatoire selon la revendication 1 ou 2, **caractérisée en ce que** le pivotement de l'unité de scie (5) autour de l'axe vertical (18) dans la position de scie longitudinale n'est libéré que dans la position de travail avant ressortie de l'unité de scie (5).

4. Scie oscillatoire selon l'une quelconque des revendications 1 à 3, **caractérisée en ce que** l'unité de scie (5) peut être réglée conjointement avec la lame de scie (4).

5. Scie oscillatoire selon l'une quelconque des revendications 1 à 4, **caractérisée en ce que** la position pivotée formant l'axe vertical (18) est réalisée à plat et en forme de disque avec un disque supérieur (22) et un disque inférieur (23), de préférence **en ce que** l'unité de scie (5) est montée sur le disque supérieur (22) au moyen de tiges de support adjacentes (24) et/ou de préférence, **en ce que** le disque inférieur (23) est monté sur deux tiges de traction adjacentes d'un agencement de traction (19).

6. Scie oscillatoire selon l'une quelconque des revendications 1 à 5, **caractérisée en ce que** la surface d'appui de la pièce (2) est prévue complètement ou en partie sur une table d'appui de pièce (25) montée sur le support (1) et pouvant pivoter autour d'un axe vertical, la table d'appui de pièce (25) présentant de préférence un bras de potence (26), et **en ce que** la fixation (3) est montée sur la table d'appui de pièce (25).

7. Scie oscillatoire selon l'une quelconque des revendications 1 à 6, **caractérisée en ce que** la surface d'appui de pièce (2) présente une fente d'enfoncement (27) ou un évidement pour le bord de la lame de scie (7) se trouvant dans la position de scie oscillatoire et abaissée dans la position de sciage, et **en ce que** la surface d'appui de pièce (2) présente en outre une fente d'enfoncement supplémentaire ou un évidement (28) pour le bord de la lame de scie (7) se trouvant dans la position de scie longitudinale et abaissée dans la position de sciage, et de préférence **en ce que** la fente d'enfoncement supplémentaire est orientée à angle droit par rapport à la fente d'enfoncement (27).

8. Scie oscillatoire selon l'une quelconque des revendications 1 à 7, **caractérisée en ce que** sur l'unité de scie (5), sur le support (1) ou, de préférence, sur le capot de protection pendulaire (9), est montée ou peut être montée une cale à fente (29) pour la position de scie longitudinale de l'unité de scie (5).

9. Scie oscillatoire selon l'une quelconque des revendications 1 à 8, **caractérisée en ce que** la fixation (3) présente un agencement d'inclinaison (30) avec lequel l'unité de scie (5) peut être pivotée par rapport au support (1) autour d'un axe longitudinal s'étendant essentiellement à angle droit par rapport à l'axe transversal (4), situé dans le plan de la surface d'appui de pièce (2) ou parallèlement à ce plan, le pivotement étant de préférence prévu uniquement d'un seul côté et étant de préférence limité à 45° au maximum.
